Europäisches Patentamt

European Patent Office

Office européen des brevets

(11) Numéro de publication: **0 295 686 B1**

(12) **FASCICULE DE BREVET EUROPEEN**

(45) Date de publication de fascicule du brevet: **11.03.92**  (51) Int. Cl.⁵: **B65H  3/08**, B07C 1/02, B65G 47/91

(21) Numéro de dépôt: **88109664.8**

(22) Date de dépôt: **16.06.88**

(54) Dispositif de dépilage d'objets plats.

(30) Priorité: **18.06.87 FR 8708519**

(43) Date de publication de la demande:
**21.12.88 Bulletin  88/51**

(45) Mention de la délivrance du brevet:
**11.03.92 Bulletin  92/11**

(84) Etats contractants désignés:
**DE FR GB NL**

(56) Documents cités:
**EP-A- 0 212 865        DE-A- 3 326 552
DE-C- 1 112 538        GB-A- 2 125 367
US-A- 3 193 281        US-A- 3 724 687**

(73) Titulaire: **COMPAGNIE GENERALE D'AUTOMA-
TISME CGA-HBS
12, rue de la Baume
F-75008 Paris(FR)**

(72) Inventeur: **Delbe, Emmanuel
2, rue Charles Lindbergh
F-07500 Granges les Valence(FR)**
Inventeur: **Gillet, François
105 Allée des Peupliers
F-95620 Parmain(FR)**

Inventeur: **Serot, Etienne
387, avenue de Provence
F-07500 Granges les Valence(FR)**
Inventeur: **Chifflet, Raymond
190 Allée du Grand Châtelet
F-07500 Granges les Valence(FR)**
Inventeur: **Allio, Roland
2 Hameau des Marettes La Roche de Glun
F-26600 Tain l'Hermitage(FR)**
Inventeur: **Jeantin, Philippe
26, rue Marc Sangnier
F-26000 Valence(FR)**
Inventeur: **Del Fabro, Gilbert
20 Route de Valence La Roche de Glun
F-26600 Tain l'Hermitage(FR)**
Inventeur: **Forella, Guy
Ouartier des Champs
F-07130 Saint Peray(FR)**

(74) Mandataire: **Weinmiller, Jürgen et al
Lennéstrasse 9 Postfach 24
W-8133 Feldafing(DE)**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).

## Description

La présente invention concerne un dispositif de dépilage d'objets plats, c'est-à-dire un dispositif prélevant un à un des objets plats dans une pile en vue de les présenter un à un dans une position de sortie, à l'intention d'une machine utilisatrice, ainsi qui un procédé de commande du dispositif de depilage.

Ce objets plats peuvent être en particulier des plis postaux et le dispositif de dépilage peut servir à l'alimentation d'une machine d'indexation et/ou de tri.

De manière connue, les dispositifs de dépilage d'objets plats comportent essentiellement un magasin de stockage des plis en pile et une tête de dépilage en bout du magasin. Le magasin comprend des moyens d'entraînement visant à présenter le premier pli de la pile dans une position bien définie, debout sur chant. La tête de dépilage peut être constituée par une ventouse animée d'un mouvement de plongée pour venir au contact du premier pli de la pile et le saisir par aspiration, et d'un mouvement de translation, pour l'entraîner hors de sa position d'arrêt, jusqu'à une position de sortie où il est pris par la machine utilisatrice. Pendant ce temps, la pile avançant dans le magasin, le pli suivant a pris la place du précédent.

On trouvera, dans le document GB-A-2 125 367, une illustration de ce type de solution. La ventouse, bien qu'elle comporte un soufflet, est relativement rigide et sa lèvre seulement s'adapte à la forme de la surface de l'objet à saisir.

Des systèmes à ventouses sont par ailleurs connus dans d'autres domaines où le problème de la séparation unitaire d'objets plats ne se pose pas dans les même termes (cf. US-A-3 724 687, DE-A-3 326 552, US-A-3 193 281, EP-A-0 212 865, DE-C-1 112 538).

Les plis postaux, en effet, peuvent être de caractéristiques très variées et peuvent présenter à la tête de dépilage des surfaces rigides ou molles, lisses ou poreuses, tandis que le pli dans son ensemble peut être mince ou épais, léger ou lourd. La tête de dépilage doit être capable de saisir et de mettre en mouvement des plis lourds et épais à surface rigide et lisse, aussi bien que des plis ouverts ; elle doit donc avoir une force d'aspiration suffisamment élevée. Par contre, dans un lot de courrier, on peut rencontrer jusqu'à de simples feuilles légères, minces et poreuses ayant une tendance naturelle à adhérer les unes aux autres et que la force d'aspiration élevée de la tête de dépilage, de temps à autre, attire ensemble pour les emmener ensemble dans la position de sortie.

Le dépilage, c'est-à-dire le prélèvement un à un des plis d'une pile, reste ainsi un problème dont la solution est imparfaite.

La présente invention a donc pour but de fournir une tête de dépilage perfectionnée, dont les performances en matière de séparation des objets minces, en particulier, sont nettement améliorées, sans dégradation en ce qui concerne le dépilage des autres objets.

L'invention a ainsi pour objet un dispositif de dépilage d'objets plats comprenant une tête de dépilage pourvue d'une ventouse seulement pour acheminer le premier objet plat d'une pile de tels objets qui lui sont présentés vers une position de sortie où l'objet plat saisi est relâché cette tête de dépilage comprenant des moyens de plongée pour approcher cette ventouse du premier objet plat, caractérisé en ce que la ventouse est une ventouse à soufflet faite d'un matériau souple tel que, lorsqu'elle se saisit du premier objet plat de la pile, elle se rétracte sous l'effet de la dépression et entraîne avec elle dans son mouvement de retrait la surface de l'objet saisi.

Le retrait de la ventouse donne une impulsion à l'objet saisi, tendant à le séparer d'un autre objet auquel il adhèrerait éventuellement.

L'invention prévoit en outre que les moyens de plongée comprennent une monture dotée de moyens de guidage de plongée et de moyens d'entraînement. Les moyens de guidage sont de préférence deux coulisses parallèles et les moyens d'entraînement un moteur électrique avec une transmission par pignon et crémaillère.

L'invention prévoit encore des moyens pour mouvoir la ventouse de la position de saisie vers une position de sortie où l'objet saisi est relâché, comprenant un chariot. De préférence, ce chariot est guidé par deux coulisses parallèles et entraîné par un moteur électrique, par l'intermédiaire d'une transmission à courroie.

En outre, l'invention prévoit d'ajouter, à côté de la ventouse, un patin fixé à la monture et dont la surface est proche du plan de préhension de la ventouse. Ce patin oppose un obstacle lorsque la ventouse se rétracte, afin de gauchir la surface de l'objet saisi et de faciliter la séparation du premier objet de la pile.

L'invention propose enfin un procédé de commande des mouvements de la tête dans lequel le mouvement de plongée de la ventouse comprend essentiellement une avance rapide sur une distance déterminée, pouvant être interrompue par la détection de la présence d'un pli, puis une avance lente, jusqu'à ce que la saisie ait lieu.

Les différentes caractéristiques et avantages de la présente invention ressortiront dans de plus amples détails à la lecture de la description d'un exemple de réalisation de l'invention, en se reportant aux figures annexées qui représentent :

- la figure 1, une vue d'ensemble d'un dispositif de dépilage conforme à la présente invention,

- la figure 2, une vue de côté en coupe partielle du magasin connu du dispositif de dépilage de la figure 1,
- la figure 3, une vue en élévation en coupe partielle de la tête de dépilage de la figure 1,
- la figure 4, une vue partielle de dessus de la monture portant la ventouse et le patin dans la tête de dépilage de la figure 1,
- la figure 5, une vue transversale en coupe suivant l'axe du chariot, de la monture et de ses moyens d'entraînement,
- la figure 6, une vue de dessus de la ventouse rétractée et de l'action du patin qui aboutissent à un gauchissement de la surface 100 d'un pli saisi par la ventouse,
- la figure 7, un diagramme donnant un exemple de procédé de commande des mouvements du dispositif de dépilage des figures précédentes.

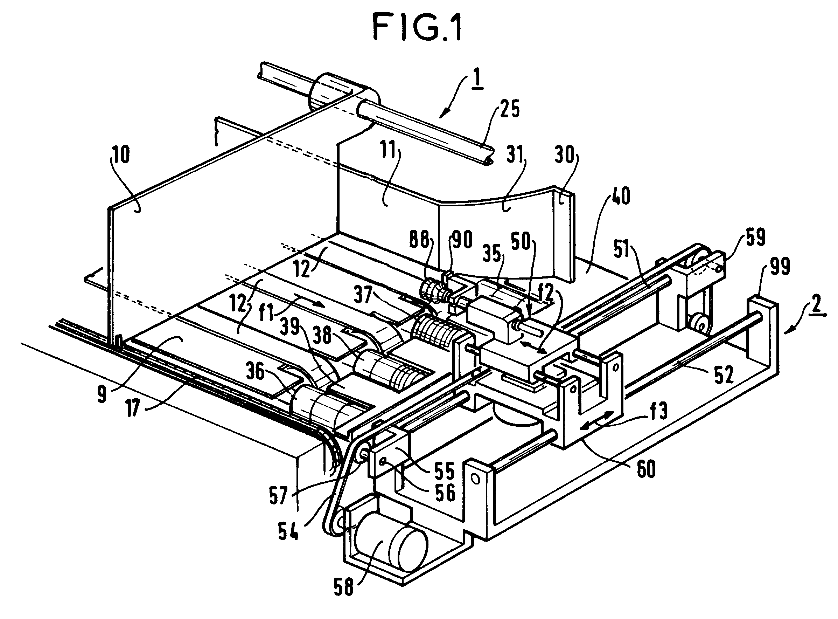

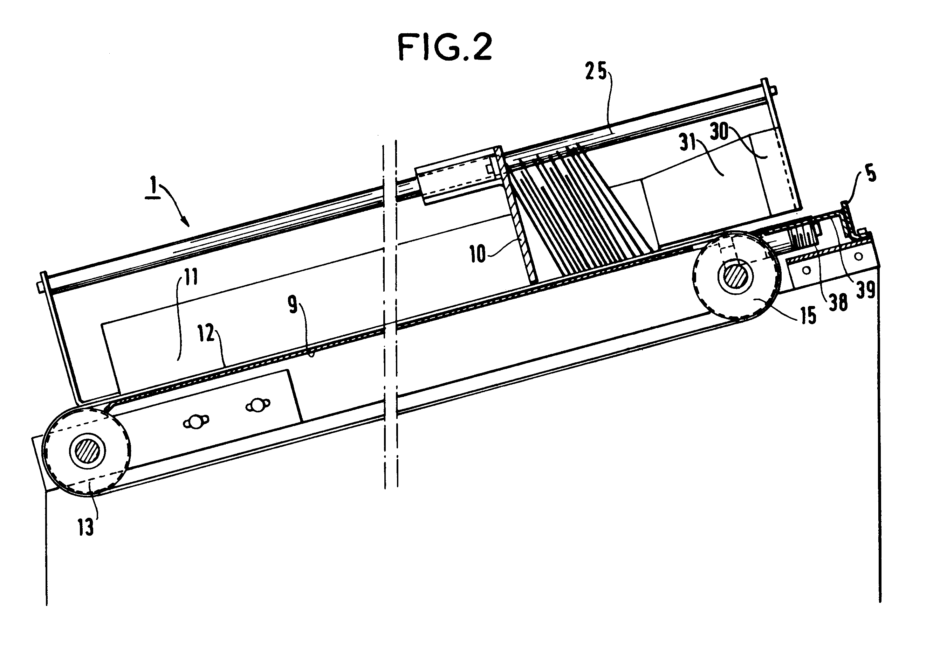

Le dispositif de dépilage que représente la figure 1 comporte un magasin 1 et une tête de dépilage 2 montée en bout, c'est-à-dire à l'avant du magasin 1. Le magasin 1 est connu. Il est représenté par la figure 2, vu de côté et carter latéral retiré, afin d'illustrer la présentation des plis devant la tête de dépilage.

Ce magasin 1 est prévu pour le chargement manuel d'une pile de plis. Il est ouvert à sa partie supérieure et les plis sont déposés sur le fond 9, incliné sur l'horizontale, avec une pente ascendante d'arrière en avant. La pile de plis est déposée en avant d'une palette 10 sur laquelle elle s'appuie. Un flanc latéral interne 11 retient éventuellement la pile lors du chargement. Des moyens d'entraînement des plis entraînent ceux-ci tels qu'ils ont été chargés vers la tête de dépilage 1. Ils comprennent des courroies 12 et une chaîne sans fin 17, tendues entre des poulies 13, 15, dont l'une est motrice. La palette 10 glisse le long d'un guide latéral 25 par un coulisseau non référencé et comprend un ergot non représenté qui s'accroche entre les maillons de la chaîne 17. La pile de plis est ainsi entraînée par le chant des plis qui s'appuie sur les courroies 12 et par la palette 10 contre laquelle repose le dos du dernier pli, dans le sens de la flèche f1. Lors du chargement d'un nouvelle pile de plis, la palette est dégagée de la chaîne 17 et ramenée en arrière à la main.

Le flanc 11 est prolongé par une rive de taquage 31 et une surface terminale de taquage 30 contre laquelle, en bout de magasin, les plis sont sollicités par des galets 36, 38, 37 et 35 dont l'axe est parallèle aux courroies et dont la surface affleurant celle des courroies est animée, par rotation, d'un mouvement en direction des rives de taquage 31, 30, communiqué par friction aux plis de la pile progressant vers la tête de dépilage. La continuité du fond 9 est assurée entre les galets par un prolongement 39 ayant une forme dentelée.

Par ailleurs, la surface des galets possède des empreintes hélicoïdales préparant le dépilage des plis en accélérant, puis en ralentissant le mouvement de leur base, tandis qu'ils glissent contre la rive de taquage.

Un même moteur électrique, avec une transmission adéquate, peut être employé pour l'entraînement des courroies, de la chaîne et des galets de taquage.

Une butée 5 a enfin été figurée sur le prolongement 39. Elle arrête le premier pli de la pile, dans un position propre à ce qu'il soit saisi par la tête de dépilage. Un détecteur, comprenant par exemple une ou plusieurs cellules photo-électriques, permet, de manière connue, de déterminer qu'un pli vient d'arriver contre la butée 5. Les moyens d'entraînement sont alors arrêtés ou débrayés. L'enlèvement de ce pli les remettra en action.

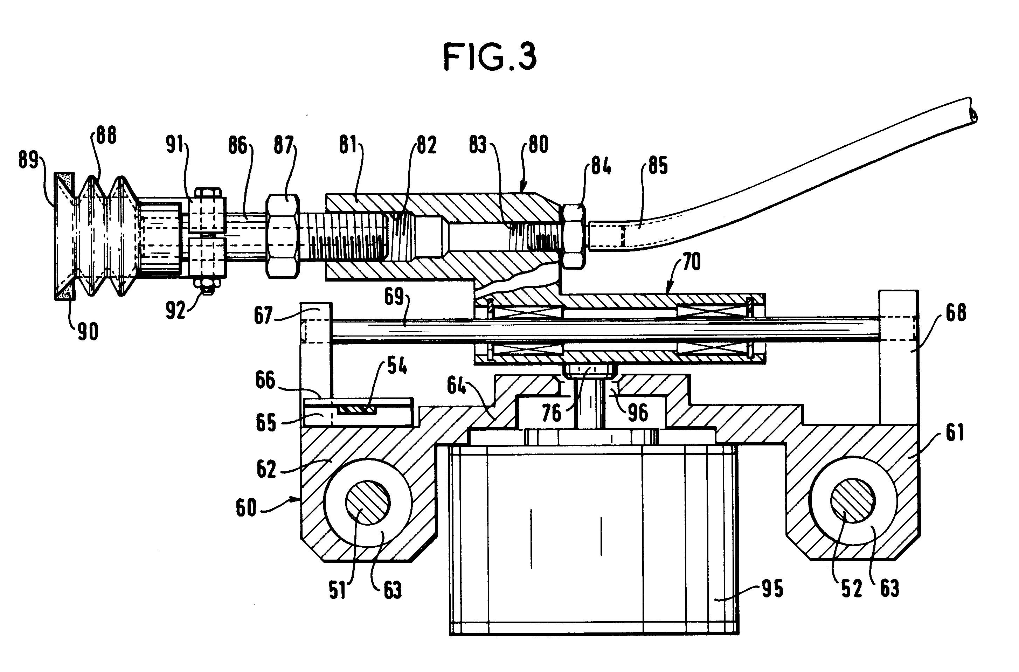

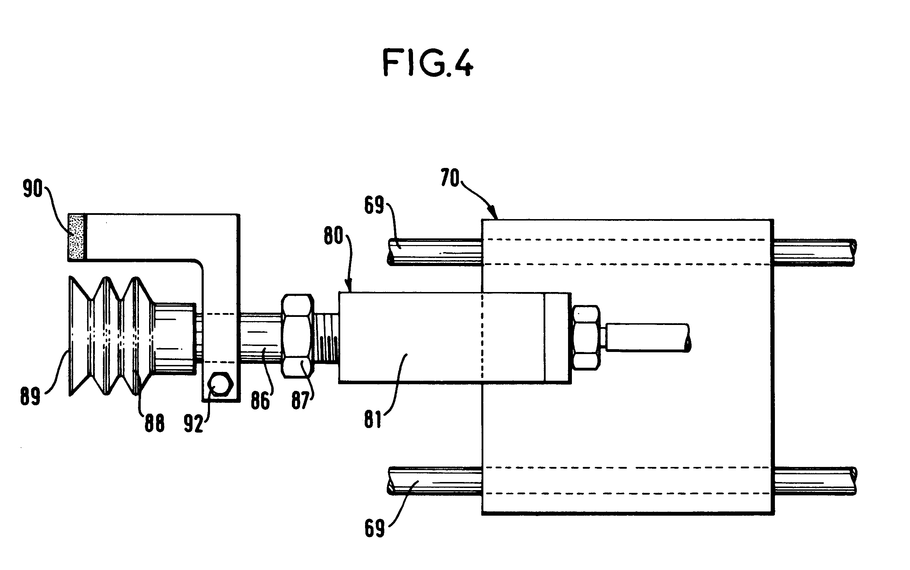

La tête de dépilage illustrée en 2 à la figure 1 est représentée de façon plus détaillée par les vues en élévation, de dessus et de bout des figures 3, 4 et 5. Elle comprend essentiellement une monture 50 mobile selon la flèche f2, portée par un chariot 60, lui-même mobile selon la flèche f3. La monture 50 porte la ventouse 88 et le patin 90.

Le déplacement selon la flèche f2 permet d'approcher la ventouse 88 et le patin 90 du premier pli de la pile, arrêté dans le magasin 1 contre la butée 5 et dont la présence est signalée par des moyens de détection, comme indiqué précédemment, jusqu'à ce que la surface de ce pli se colle à la ventouse, sous l'effet de la dépression entretenue dans celle-ci. Un déplacement selon la flèche f3 permet alors d'entraîner le pli saisi par la ventouse 88, jusqu'à la position de sortie 40, où il est relâché par la ventouse, par suppression de la dépression, et repris par des moyens d'exploitation non représentés, tels qu'une machine d'indexation ou de tri du courrier.

Le chariot 60 glisse par rapport à deux coulisses parallèles 51, 52, portées par des piliers 99 solidaires du chassis de la machine. A cette fin, il est entraîné par une courroie crantée 54 tendue entre des pignons 57 portés par des appuis 55, 59, par l'intermédiaire d'axes respectifs 56, cette courroie étant mue par un moteur électrique 58.

Plus précisément, le chariot 60 comprend deux coulisseaux 61, 62, parallèles et pourvus d'alésages 63 contentant des coussinets traversés respectivement par les coulisses 51, 52. Ces coulisseaux sont réunis par un pont 64 prévu pour recevoir et supporter le moteur d'entraînement de plongée 95 et pourvu d'un alésage central 96, laissant passer l'arbre de ce moteur couplé à un pignon d'entraînement 76.

Le chariot 60 est couplé à la courroie crantée 54 par deux pièces de serrage 65, 66 pressées l'une contre l'autre et fixées au coulisseau 62. Les coulisseaux 61, 62 portent chacun deux piliers 67, 68 sur lesquels sont montés les coulisses parallèles 69 de la monture 70.

On n'a pas représenté des moyens de détection, simples au demeurant, pouvant être fixés aux piliers 99 et décelant que le chariot 60 se trouve vers la gauche (fig. 1), dans une position de départ déterminée, qui est celle dans laquelle la tête de dépilage saisit les plis fournis par le magasin 1, ou alors vers la droite, dans une position de sortie déterminée 40 qui est celle dans laquelle la tête de dépilage relâche les plis qu'elle a saisi.

La monture 70 glisse sur les coulisses 69 par deux coulisseaux parallèles 71, 72, pourvus d'alésages 73 contenant des coussinets traversés respectivement par les coulisses 69. Ces coulisseaux sont réunis par un pont 74 portant un support de ventouse 80. Une crémaillère 75 est fixée sous le pont 74, contre le coulisseau 72. Le pignon moteur 76 s'engrène avec cette crémaillère de sorte que le moteur 95 peut entraîner la monture 70 d'une position de départ (à droite sur la figure 3) vers une position de saisie (à gauche sur la figure 3), dans des conditions qui seront explicitées plus loin.

On n'a pas non plus figuré des capteurs pouvant être fixés aux piliers 67, 68 et détectant, de manière connue, que la monture se trouve soit dans sa position de départ, soit dans une position d'avance maximale. La monture peut porter en outre un capteur de proximité décelant la présence d'un pli à une certaine distance devant la ventouse.

Le support de ventouse 80 comprend essentiellement une équerre de support 81, percée d'un alésage axial 82, 83 fileté à ses deux extrémités. L'alésage 83 permet le raccordement d'une conduite de dépression souple 85, par l'intermédiaire d'un embout 84. Il débouche dans l'alésage 82 qui permet la fixation d'un tube de montage de ventouse 86, par un embout 87, avec interposition éventuelle d'un joint. La ventouse 88 est une pièce à un ou plusieurs soufflets, deux en l'occurence, en matériau souple, comme un caoutchouc, qui peut se rétracter lorsque son orifice 89 est appliqué contre une surface d'obturation et attire cette surface vers la monture 70.

Un détecteur de minimum de pression, ou vacuostat, peut être connecté à la conduite 85, afin de signaler la saisie d'un pli par la ventouse 88, lorsque la pression dans la conduite 85 tombe en dessous d'un seuil déterminé.

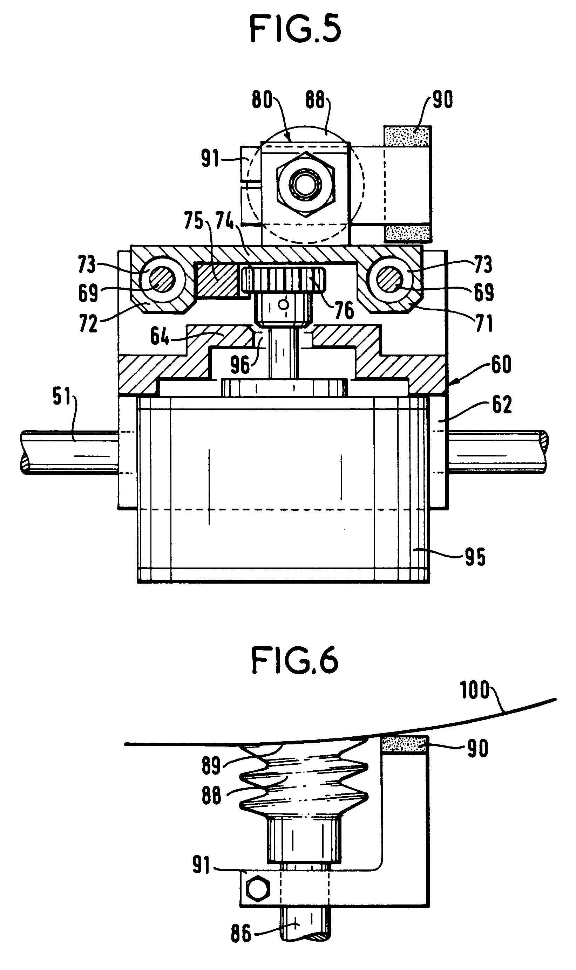

Sur le tube de montage de ventouse est fixé le patin 90, par l'intermédiaire d'un bras coudé 91, dont une bride est serrée par une vis 92. L'extrémité du patin 90 se trouve dans le plan de l'orifice 89 de la ventouse 88. Lorsqu'un pli 100 est présenté devant l'orifice 89, la ventouse le happe et se rétracte et, comme le représente sommairement la figure 6, la surface du pli se gauchit, puisqu'elle est soumise à la traction de l'orifice 89 accomplissant un mouvement de retrait par rapport au patin 90 et qu'elle est retenue par le patin 90 faisant obstacle à son mouvement d'accompagnement de l'orifice de la ventouse 88. Le pli suivant dans la pile, qui n'est pas soumis aux mêmes influences, ne se gauchit pas de la même façon. Il se sépare donc de celui qui vient d'être saisi. Cet effet est d'autant plus marqué que le retrait de la ventouse 88 est brusque, ce qui met à profit l'inertie du deuxième pli vis-à-vis du mouvement accompli par le premier. On remarquer que le mouvement de retrait de la ventouse sera d'autant plus brusque que le pli qu'elle entraîne est léger, ce qui concourt à améliorer le dépilage d'objets minces généralement difficiles à séparer les uns des autres.

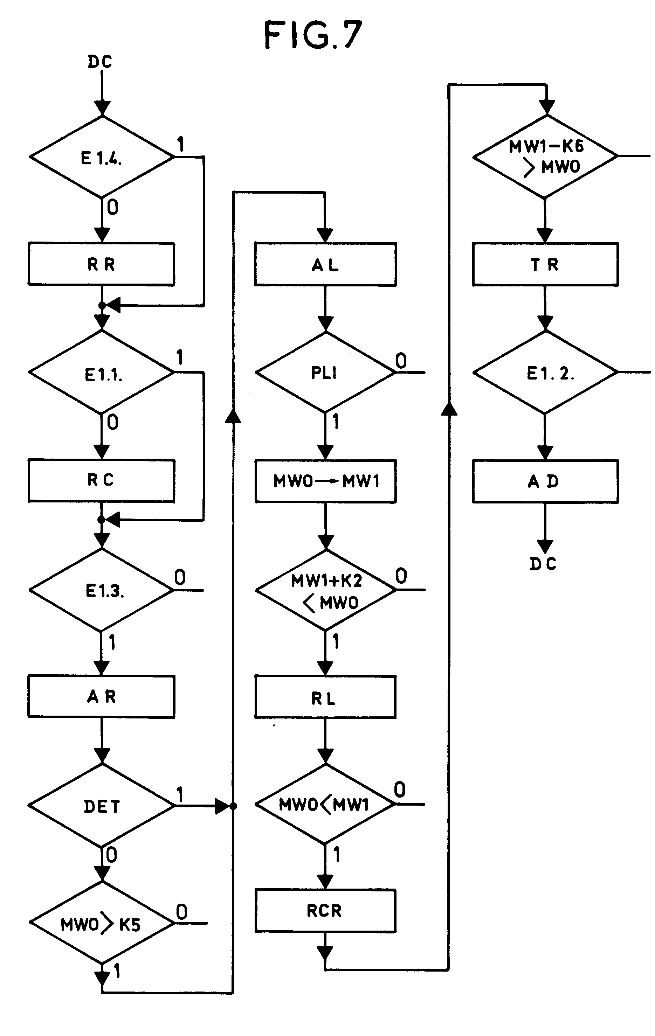

On va maintenant décrire un mode de fonctionnement de la tête de dépilage que l'on vient de décrire, en se référant à l'organigramme de la figure 7.

Ce mode de fonctionnement sera de preférence mis en oeuvre à l'aide d'un multiprocesseur dont les signaux d'entrée seront les signaux des capteurs dont l'existence a déjà été indiquée. A ceux-ci, il est également ajouté un capteur de déplacement de la monture 50, non représenté sur les figures, qui prendra par exemple la forme bien connue d'une règle à impulsions. Les impulsions de ce capteur sont fournies au microprocesseur qui en tient en permanence un compte dans un registre en mémoire.

Les signaux d'entrée dont dispose le microprocesseur sont ainsi résumés ci-après :

DET = signal d'un détecteur porté par la monture 50 et indiquant la présence d'un pli à une distance déterminée devant la ventouse,

E 1.4. = monture 50 en position de départ,

E 1.1. = chariot 60 en position de départ,

E 1.3. = signal de commande de cycle qui peut provenir d'un bouton pressé par un opérateur pour demander que la machine prélève un pli de la pile, ou être fourni automatiquement par la machine utilisatrice

MWO = compte des impulsions de la règle à impulsions définissant à tout instant la position de la monture 50,

K5 = première constante,

PLI = signal du vacuostat indiquant la présence d'un pli,

MW1 = valeur intermédiaire enregistrée,

K2 = deuxième constante,

K6 = troisième constante,

E 1.2. = chariot 60 en position d'arrivée,

Le processeur, d'une manière générale, revient périodiquement dans le processus illustré par la figure 7, au point où il l'avait abandonné lors d'une période précédente (étape indiquée par un rectangle) et interroge une entrée, afin de déterminer s'il faut passer à une étape suivante.

A la mise en route de la machine, le processeur part toujours d'une situation de début de cycle DC. Le procédé mis en oeuvre par le processeur comprend alors les étapes suivantes :

RR = tant que le signal E 1.4. est absent, le processeur commande le recul rapide de la monture 50, par envoi d'un signal de sortie commandant au circuit d'alimentation du moteur 95 de fournir à celui-ci un courant tel que la monture 50 recule ;

RC = si le signal E 1.4. est présent, indiquant que la monture 50 a atteint sa position de départ, ou si la commande RR est donnée, pour ramener la monture 50 dans cette position, et tant que le signal E 1.1. est absent, le processeur envoi un signal de commande RC au circuit de commande du moteur 58, afin que celui-ci entraîne le chariot 60, par la courroie 54, dans la direction de sa position de départ ;

AR = lorsque les signaux E 1.4. et E 1.1. sont présents, la monture et le chariot ayant tous les deux atteint leur position de départ, et si le signal E 1.3. est absent, les choses en restent là ; par contre, si le signal E 1.3. est présent, le microprocesseur envoie au circuit d'alimentation du moteur 95 un signal commandant l'envoi à celui-ci d'un courant tel que la monture (50) avance rapidement, c'est-à-dire aussi vite que le matériel le permet, tandis qu'un autre signal de commande fait que la dépression est appliquée à la ventouse 88, par commutation d'une valve, par exemple ;

AL = lorsqu'un détecteur porté par la monture 50 indique la présence d'un pli par la fourniture d'un signal DET, ou lorsque la monture 50 a avancé sur une distance maximale déterminée, le compte MWO qui indique sa position devenant égal à une constante K5 (par exemple affichée aux entrées du microprocesseur, ou entrée dans un registre par le constructeur), le microprocesseur envoie au circuit d'alimentation du moteur 95 une commande différente entraînant une avance de la monture 50, non plus rapide, mais lente, sans qu'elle occasionne une perte de temps excessive, tandis que la dépression est maintenue ;

MWO-→MW1 = l'avance lente de la monture 50 et de la ventouse 88 qu'elle porte aboutit à la saisie du premier pli de la pile, ce qui se traduit par la présence du signal PLI, à la suite duquel, le processeur transfère la valeur de compte fournie par le registre MWO dans le registre MW1, tandis que les commandes décrites dans l'étape AL restent maintenues, de sorte que la saisie du pli peut être confirmée, alors que s'accomplit le retrait de la ventouse;

RL = lorsque, après l'étape précédente, la monture 50 a encore avancé d'une distance correspondant à une valeur de compte K2, le microprocesseur, effectuant l'opération MW1 + K2 < MWO, obtient une réponse positive à l'issue de laquelle il fournit au circuit d'alimentation du moteur 95 une autre commande déterminant un recul lent de la monture 50 et de la ventouse 88 entraînant le pli saisi, tandis que la dépression est bien entendu maintenue ;

RCR = le recul lent se poursuit jusqu'à ce que, de nouveau MWO soit égal à MW1, après quoi le microprocesseur remplace la commande de recul lent par une commande de recul rapide qui ne se différencie de la commande RR que par le fait que la dépression est maintenue ;

TR = le recul rapide vise à amener le pli saisi dans une position qui convienne à la machine d'exploitation, sur une distance déterminée par une constante K6 et c'est pourquoi, lorsque le compte MWO devient inférieur à MW1-K6, le microprocesseur arrête le moteur 95 en position et fournit un signal de commande au circuit d'alimentation du moteur 58, afin que le chariot parte en direction de la position de sortie ;

AD = lorsque le chariot 60 arrive dans la position de sortie, le signal E 1.2. est présent et le microprocesseur arrête le chariot, puis coupe la dépression, pour que la ventouse 88 relâche le pli saisi ; après une temporisation, il retourne de lui-même au début de cycle DC.

Il va de soit que dans le résumé de fonctionnement qui précède, lorsque le microprocesseur accomplit une étape et fournit les commandes indiquées, toute autre commande est alors supprimée. Selon les circuits utilisés, cela peut nécessiter des commandes spécifiques d'arrêt des opérations en cours.

Le dispositif de dépilage que l'on vient de décrire et dont on vient de donner un procédé de commande ne comprend qu'une ventouse 88. Or, dans certaines applications, il se peut que le taquage ne soit pas toujours suffisamment efficace et que des plis échappent à la ventouse 88, parce qu'ils sont trop loin de la rive de taquage 30. Une solution qui est une extension de la présente invention consiste à prévoir un deuxième chariot tel que 60, avec une deuxième ventouse. La commande de ce deuxième chariot et de sa ventouse peuvent suivre celle du premier chariot (avec des positions de départ et d'arrivée différentes, toutefois) et l'effet de ce deuxième chariot sera de saisir de tels plis pour les amener en face de la première ventouse 88.

Il est bien évident que les descriptions qui précèdent n'ont été données qu'à titre d'exemple non limitatif et que de nombreuses variantes peuvent être imaginées sans sortir pour autant du cadre de l'invention.

## Revendications

**1.** Dispositif de dépilage d'objets plats comprenant une tête de dépilage (2) pourvue d'une ventouse seulement pour acheminer le premier objet plat d'une pile de tels objets qui lui sont présentés vers une position de sortie où l'objet plat saisi est relâché, ladite tête de dépilage comprenant des moyens de plongée pour approcher ladite ventouse dudit premier objet plat, caractérisé en ce que la ventouse (88) est une ventouse à soufflet faite d'un matériau souple tel que, lorsqu'elle se saisit du premier objet plat de la pile, elle se rétracte sous l'effet de la dépression et entraîne avec elle dans son mouvement de retrait au moins la surface de l'objet saisi.

**2.** Dispositif de dépilage d'objets plats conforme à la revendication 1, caractérisé en ce que lesdits moyens de plongée comprennent une monture (50) comportant des moyens de guidage de plongée lui permettant de se mouvoir linéairement par rapport à un chariot (60) dans une direction la rapprochant du premier objet de la pile, la ventouse (88) étant fixée à cette monture, ainsi que des moyens d'entraînement de la monture (95, 76, 75), pour approcher la ventouse (88) du premier objet plat de la pile.

**3.** Dispositif de dépilage d'objets plats conforme à la revendication 2, caractérisé en ce que lesdits moyens d'entraînement de la monture (50) comprennent un moteur électrique (95), un pignon d'entraînement (76) entraîné par le moteur et une crémaillère (75) dans laquelle s'engrène le pignon, la crémaillère étant solidaire de ladite monture (50), tandis que le moteur et le pignon sont solidaires dudit chariot (60).

**4.** Dispositif de dépilage d'objets plats conforme à la revendication 2 ou 3, caractérisé en ce que lesdits moyens de guidage de plongée comprennent deux coulisses (69) solidaires du chariot et deux coulisseaux (71, 72) solidaires de la monture et respectivement associés aux coulisses.

**5.** Dispositif de dépilage d'objets plats conforme à l'une des revendications 2 à 4, caractérisé en ce qu'audit chariot (60) sont associés des moyens de guidage de translation permettant de le mouvoir d'une position dans laquelle la ventouse doit, par le fonctionnement desdits moyens de plongée, saisir le premier objet plat de la pile, jusque dans une position où elle doit le relâcher, ainsi que des moyens d'entraînement en translation permettant de l'entraîner jusque dans la position où l'objet saisi doit être relâché.

**6.** Dispositif de dépilage d'objets plats conforme à la revendication 5, caractérisé en ce que lesdits moyens de guidage de translation comprennent deux coulisses fixes (51, 52) et deux coulisseaux (61, 62) solidaires du chariot et respectivement associés aux coulisses.

**7.** Dispositif de dépilage d'objets plats conforme à la revendication 5 ou 6, caractérisé en ce que lesdits moyens d'entraînement en translation comprennent un moteur électrique (58) équipé d'un pignon entraînant une courroie (54) et de pignons de renvoi (57) tendant la courroie de chaque côté du chariot, le chariot étant couplé à la courroie entre les deux pignons de renvoi.

**8.** Dispositif de dépilage d'objets plats conforme à l'une quelconque des revendications précédentes, caractérisé en ce que la tête de dépilage (2) est également pourvue d'un patin (90) disposé à côté de la ventouse (88), de manière fixe par rapport à la monture (50) portant la ventouse, et dont la surface est proche du plan de préhension de la ventouse, ce patin opposant un obstacle lorsque la ventouse se rétracte, afin de gauchir la surface de l'objet plat saisi.

**9.** Dispositif de dépilage d'objets plats conforme à l'une quelconque des revendications 1 à 8, caractérisé en ce qu'une deuxième ventouse est prévue à côté de la première, du côté opposé à ladite position de sortie, à une distance telle qu'elle puisse saisir des objets décalés dans la pile au point d'échapper à la première ventouse, le mouvement de cette deuxième ventouse étant généralement parallèle à celui de la première.

**10.** Procédé de commande du dispositif de dépilage faisant l'objet de l'une quelconque des revendications précédentes, caractérisé en ce qu'il inclut les phases successives suivantes :
- mise du chariot et de la monture dans des positions respectives de départ,
- avance rapide de la monture sur une distance déterminée, ou limitée par la détection de la présence d'un objet devant la monture,
- avance lente de la monture,

- détection du fait qu'un objet vient d'être saisi par la ventouse en un point de saisie,
- translation du chariot sur une distance déterminée,
- relâchement de l'objet saisi.

11. Procédé de commande conforme à la revendication 10 caractérisé en ce que, après le point de saisie, les étapes suivantes sont accomplies :
    - poursuite de l'avance lente de la monture sur une courte distance déterminée, après détection qu'un objet vient d'être saisi,
    - recul lent de la monture sur une distance déterminée,
    - mise en translation et relâchement comme précédemment indiqué.

**Claims**

1. A device for unstacking flat items, the device comprising an unstacking head (2) provided with a suction cup in order to transfer only the first flat item in a stack of such items which are presented thereto, towards an exit position where the grasped flat item is released, said unstacking head including plunger means for moving the suction cup near to the flat item, characterized in that the suction cup (88) is a bellows suction cup made of a flexible material such that, when it has grasped a first flat item in the stack, it retracts under the effect of the suction and in its retraction motion it entrains therewith at least the surface of the grasped item.

2. A device for unstacking flat items according to claim 1, characterized in that said plunger means include a mount (50) fitted with plunging guide means enabling it to move linearly relative to a carriage (60) in a direction towards the first item in the stack, the suction cup (88) being fixed to said mount, said plunging means further including mount drive means (95, 76, 75) for moving the suction cup (88) towards the first flat item of the stack.

3. A device for unstacking flat items according to claim 2, characterized in that said means for driving the mount (50) comprise an electric motor (95), a drive pinion (76) driven by the motor, and a rack (75) in which the pinion meshes, the rack being fixed to said mount (50) while the motor and the pinion are fixed to the carriage (60).

4. A device for unstacking flat items according to claim 2 or 3, characterized in that said plunging means comprise two slides (69) fixed to the carriage and two sliders (71, 72) fixed to the mount and associated with respective ones of the slides.

5. A device for unstacking flat items according to any one of claims 2 to 4, characterized in that translation guide means are associated with said carriage (60) enabling it to move from a position in which the suction cup is capable of grasping the first flat item in the stack by virtue of said plunging means operating, to a position in which said suction cup is to release said item, together with translation drive means for driving it to the position in which the grasped item is to be released.

6. A device for unstacking flat items according to claim 5, characterized in that said translation guide means comprise two fixed slides (51, 52) and two sliders (61, 62) fixed to the carriage and associated with respective ones of the slides.

7. A device for unstacking flat items according to claim 5 or 6, characterized in that said translation drive means comprise an electric motor (58) fitted with a pinion driving a belt (54), together with pulley wheels (57) on either side of the carriage and keeping the belt taut, with the carriage being coupled to the belt between the two pulleys.

8. A device for unstacking flat items according to any preceding claim, characterized in that the unstacking head (2) is also provided with a shoe (90) disposed at one side of the suction cup (88) and fixed relative to the mount (50) carrying the suction cup, with the surface of the shoe being close to the suction cup grasping plane, said shoe constituting an obstacle to the surface of the grasped flat item when the suction cup retracts, thereby warping said surface.

9. A device for unstacking flat items according to any one of claims 1 to 8, characterized in that a second suction cup is provided at one side of the first suction cup, on the side opposite from said exit position, and at a distance such as to be capable of grasping items on the stack which are so far offset as to escape from the first suction cup, with the movement of said second suction cup being generally parallel to that of the first.

10. A method of controlling the unstacking device according to any preceding claim, characterized in that it includes the following steps in succession:
- the carriage and the mount are put into respective starting positions,
- the mount is advanced rapidly over a predetermined distance or over a distance which is limited by detecting the presence of an item in front of the mount,
- the mount is advanced slowly,
- the fact that an item has just been grasped by the suction cup at a grasping point is detected,
- the carriage is moved in translation over a predetermined distance, and
- the grasped item is released.

11. A control method according to claim 10, characterized in that after the grasping point, the following steps are performed:
- the mount continues to advance slowly over a short predetermined distance after detection that an item has been grasped,
- the mount is reversed slowly over a given distance, and
- the carriage is moved in translation and the item is released as mentioned above.

**Patentansprüche**

1. Einrichtung zur Entnahme flacher Gegenständen von einem Stapel, wobei ein Entstapelkopf (2) einen Saugnapf, der nur zum Befördern eines ersten flachen Gegenstands eines Stapels solcher Gegenstände, die ihm dargeboten werden, in eine Auslaßstellung dient, in der der erfaßte Gegenstand losgelassen wird, und Bewegungsmittel zum Heranführen des Saugnapfs an den ersten Gegenstand aufweist, dadurch gekennzeichnet, daß der Saugnapf (88) einen Faltenbalg aus elastischem Material aufweist, derart, daß der Sauger, wenn er den ersten flachen Gegenstand des Stapels erfaßt, sich unter der Wirkung des Unterdrucks zusammenzieht und bei seiner Rückzugsbewegung mindestens die Oberfläche des gefaßten Gegenstands mitnimmt.

2. Einrichtung zur Entnahme von flachen Gegenständen nach Anspruch 1, dadurch gekennzeichnet, daß die Bewegungsmittel einen Aufbau (50) mit Führungsmitteln für die Bewegung aufweisen, der ihm eine geradlinige Bewegung relativ zu einem Wagen (60) in einer Richtung ermöglicht, die ihn an den ersten Gegenstand des Stapels heranführt, wobei der Saugnapf (88) an diesem Aufbau befestigt ist, und daß sie Antriebsmittel (95, 76, 75) für den Aufbau aufweisen, um den Saugnapf (88) an den ersten flachen Gegenstand des Stapels heranzubringen.

3. Einrichtung zur Entnahme von flachen Gegenständen nach Anspruch 2, dadurch gekennzeichnet, daß die Mittel zum Antrieb des Aufbaus (50) einen Elektromotor (95), ein vom Motor angetriebenes Antriebsritzel (76) und eine Zahnstange (75) aufweisen, mit der das Ritzel kämmt, wobei die Zahnstange mit dem Aufbau (50) fest verbunden ist, während der Motor und das Ritzel mit dem Wagen (60) fest verbunden sind.

4. Einrichtung zur Entnahme von flachen Gegenständen nach Anspruch 2 oder 3, dadurch gekennzeichnet, daß die Führungsmittel für die Bewegung zwei Gleitstangen (69), die mit dem Wagen fest verbunden sind, und zwei Gleithülsen (71, 72) aufweisen, die mit dem Aufbau verbunden sind.

5. Einrichtung zur Entnahme von flachen Gegenständen nach einem der Ansprüche 2 bis 4, dadurch gekennzeichnet, daß dem Wagen (60) Führungsmittel für die Translationsbewegung zugeordnet sind, die es ermöglichen, den Wagen aus einer Stellung, in der der Saugnapf durch die Aktion der Bewegungsmittel den ersten flachen Gegenstand des Stapels fassen muß, bis in eine Stellung zu bringen, in der er ihn loslassen muß, und daß dem Wagen weiter Translationsbewegungsmittel zugeordnet sind, die seine Fortbewegung bis in diejenige Stellung ermöglichen, in der der Gegenstand losgelassen werden soll.

6. Einrichtung zur Entnahme von flachen Gegenständen nach Anspruch 5, dadurch gekennzeichnet, daß die Translationsführungsmittel zwei feststehende Gleitstangen (51, 52) und zwei mit dem Wagen verbundene Gleitblöcke (61, 62) aufweisen, die je einer der Gleitstangen zugeordnet sind.

7. Einrichtung zur Entnahme von flachen Gegenständen nach Anspruch 5 oder 6, dadurch gekennzeichnet, daß die Translationsbewegungsmittel einen Elektromotor (58), der mit einem einen Riemen antreibenden Ritzel versehen ist, und Vorgelegeritzel (57) zu beiden Seiten des Wagens aufweisen, die den Riemen spannen, wobei der Wagen zwischen den beiden Vorgelegeritzeln an den Riemen angekoppelt ist.

8. Einrichtung zur Entnahme von flachen Gegenständen nach einem beliebigen der vorhergehenden Ansprüche, dadurch gekennzeichnet, daß der Entstapelkopf (2) außerdem mit einem Schuh (90) versehen ist, der neben dem Saugnapf (88) fest in Bezug auf den den Saugnapf tragenden Aufbau (50) angeordnet ist und dessen Oberfläche sich in der Nähe der Saugebene des Saugnapfes befindet, wobei der Schuh ein Hindernis bildet, wenn der Saugnapf zurückgezogen wird, um die Oberfläche des gefaßten flachen Gegenstands zu wölben.

9. Einrichtung zur Entnahme von flachen Gegenständen nach einem beliebigen der Ansprüche 1 bis 8, dadurch gekennzeichnet, daß ein zweiter Saugnapf an der Seite des ersten Saugnapfs an der der Auslaßposition entgegengesetzten Seite vorgesehen ist, und zwar in einem solchen Abstand, daß der zweite Saugnapf im Stapel verschobene und dem ersten Saugnapf entschlüpfende Gegenstände fassen kann, wobei die Bewegung des zweiten Saugnapfs im allgemeinen parallel zu derjenigen des ersten Saugnapfs verläuft.

10. Verfahren zur Steuerung der Entnahme eines Gegenstands von einem Stapel nach einem beliebigen der vorhergehenden Ansprüche, dadurch gekennzeichnet, daß es die folgenden nacheinander ablaufenden Phasen aufweist:
    - der Wagen und der Aufbau werden in ihre jeweiligen Startpositionen gebracht,
    - der Aufbau wird schnell ein Stück vorgeschoben, ggfs. bis zum Erfassen der Tatsache, daß ein Gegenstand sich vor dem Aufbau befindet,
    - der Aufbau wird langsam vorgeschoben,
    - die Tatsache wird erfaßt, daß ein Gegenstand vom Saugnapf in einem Erfassungspunkt erfaßt wurde,
    - Parallelbewegung des Wagens über eine bestimmte Entfernung, und
    - Loslassen des gefaßten Gegenstands.

11. Steuerverfahren nach Anspruch 10, dadurch gekennzeichnet, daß im Anschluß an die Erfassung eines Gegenstands folgende Schritte durchgeführt werden:
    - die langsame Vorwärtsbewegung des Aufbaus wird über eine bestimmte kurze Entfernung nach der Feststellung fortgesetzt, daß ein Gegenstand erfaßt wurde,
    - der Aufbau wird über eine bestimmte Entfernung zurückgezogen, und
    - der Wagen wird wie oben angegeben versetzt und der Gegenstand wird losgelassen.

FIG.1

FIG.2

# FIG.3

EP 0 295 686 B1

FIG.4

# FIG.5

# FIG.6

FIG.7